# EUROPEAN PATENT APPLICATION

(11) **EP 3 848 882 A2**
(43) Date of publication of application: **14.07.2021**
(21) Application number: 19858124.1
(22) Date of filing: 31.08.2019
(51) Int. Cl.: G06Q 30/06, G06Q 50/12

(54) **QOS-BASED MOBILE ORDER PROCESSING METHOD USING SHOP ARRIVAL IDENTIFICATION**

(30) Priority: 07.09.2018 KR 20180107158
(71) Applicant: Yap Company Inc., Seoul 03142 (KR)
(72) Inventor: KIM, Kyung Hoon, Suwon-si Gyeonggi-do 16423 (KR); CHOI, In Chan, Seoul 03770 (KR); YOON, Ju No, Seoul 01752 (KR); LEE, Hyun Min, Uiwang-si Gyeonggi-do 16023 (KR); CHOI, Jin Hee, Seoul 08866 (KR); CHO, Hang Won, Incheon 21996 (KR)
(74) Representative: Hoefer & Partner Patentanwälte mbB
(86) International application number: PCT/KR2019/011229
(87) International publication number: WO 2020/050560

(57) **Abstract**

The present invention relates to a QoS-based mobile order processing technology which can improve mobile ordering procedure of customers and guarantee Quality of Service (QoS) above a certain level to customers in processing the mobile order which is entered on a customer's smart terminal on the go, by accurately identifying the event of customer's arrival at the shop so as to supplement the contents of the mobile order and to determine when to forward the mobile order to the shop in response to the customer's arrival. According to the present invention, there is an advantage in that the quality of service can be guaranteed through technical configuration by transacting a mobile order which is entered on the go by a customer by use of shop arrival identification.

## Description

### Field of the Invention

The present invention generally relates to a technology for processing a transaction so that a mobile order (i.e., an order for goods or reservation) which is entered on a customer's smart terminal on the go can be forwarded to the shop so as to be appropriately responded to.

More specifically, the present invention relates to a QoS-based mobile order processing technology which can improve mobile ordering procedure of customers and guarantee Quality of Service (QoS) above a certain level to customers in processing the mobile order which is entered on a customer's smart terminal on the go, by accurately identifying the event of customer's arrival at the shop so as to supplement the contents of the mobile order and to determine when to forward the mobile order to the shop in response to the customer's arrival.

### Background Art

Conventionally, there have been various attempts on the manner in which a customer orders a goods in commercial spaces such as restaurants and cafes. Traditionally, when a customer visits a shop and sits down, a shop staff responds and receives an order through person-to-person communication, which is still practiced in most of shops today. Subsequently, as communication technology has developed, telephone ordering has been proposed and used habitually in chicken, pizza, fast foods, and Chinese restaurants. Further, as Internet has been popular, internet ordering has been generalized for ordering a goods or making a reservation for a service.

In addition, there has been widely spread in which kiosks or tablet terminals are installed in a shop so that a customer visiting the shop can order a goods along with payment for himself by operating these devices without communicating with the shop staffs.

In addition, as smart phones have been widely spread, the culture of ordering by apps has also been rapidly increasing. This is mainly used for delivery orders, starting from Chinese food, chicken, pizza, and fast food where telephone ordering has been conventionally used, to pork feet, sashimi, and set meal where traditional ordering has been used.

As such, the manner in which customers order a goods in a commercial space has changed in various ways. However, they have left the sequence of actions (culture) which customers perform to use the shop, that is, a series of actions which customers perform for direct visits or delivery orders. They only have replaced the contact technology between the customer and the shop. Even though an order method is changed, only the ordering technology is changed, with leaving a series of actions which customers perform to use the shop remaining unchanged. This may provide an advantage of allowing new technologies to spread without reluctance. On the other hand, this may provide a limitation on the benefit of the new technologies.

On the other hand, the recently proposed 'mobile ordering' technology is an attempt to change the action sequence of a customer in using the shop. The mobile ordering conceptually means that a customer places an order using his smart terminal while on the go or at a remote location. For example, after ordering a goods (e.g., coffee) from the outside with a smart phone app, the customer can visit the shop later to pick up the goods. In addition, after making a reservation for a shop space, e.g., restaurant or conference room, the customer can visit the shop later to use the reserved space. The mobile ordering is to suggest a completely new usage pattern differentiated from the conventional ones. Although the usage ratio is still relatively low compared to the conventional ordering method, the technology development and process optimization is being actively performed with the spread of smart phones.

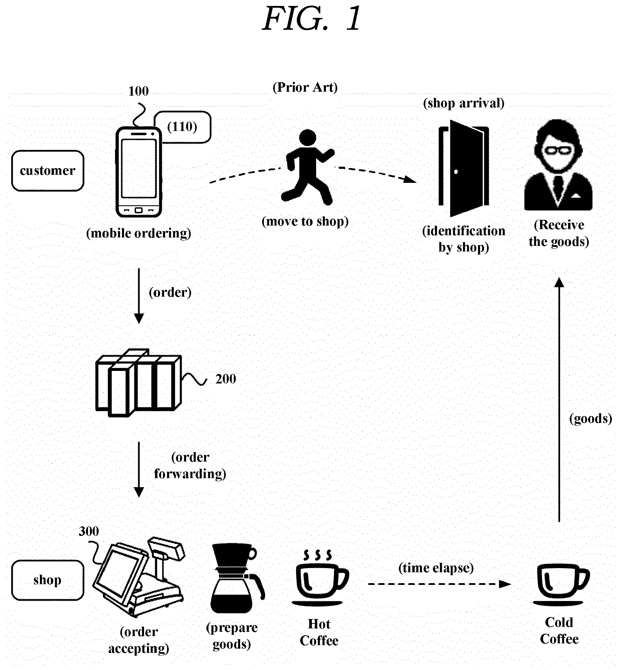

FIG. 1 is a diagram conceptually showing an example of conventional mobile order processing method, and also shows the problem which the inventors of the present invention found while using the conventional mobile order processing method.

Referring to FIG. 1, when a customer enters a mobile order for a specific goods on his smart terminal (100) on the go, the corresponding order information is transmitted to the order management server (200). The mobile order identification and the order information transmission are performed by the mobile agent unit (110) which is installed in the smart terminal (100). The mobile agent unit (110) is implemented in a form of a dedicated program or an app. At this time, the mobile ordering procedure follows the menu structure of the mobile agent unit (110). In general, in the mobile ordering procedure, a customer selects a specific goods of a specific brand to order, and designates a shop to pick up the goods.

The order management server (200) forwards the mobile order data to a shop terminal (300) installed in the shop which is designated by the customer. In general, a number of shops are provided by regions for each brand, and a shop terminal (300) is installed in each shop in order to receive and process orders for the shop. Among these shop terminals (300), the order management server (200) forwards the mobile order data to a shop terminal (300) installed in the shop which is designated by the customer in the mobile ordering procedure.

When the shop terminal (300) receives the mobile order, the shop prepares the ordered goods according to the order specified in the business regulation. Although there are slight variations depending on the number of visitors to the shop, it usually takes about 1 to 2 minutes for the goods to be prepared, for example, a cup of hot coffee. Meanwhile, after entering the mobile order, the customer moves to the shop by car or on foot. When the customer arrives at the shop, he may directly inform to the shop counter or may be automatically identified at the shop counter by a beacon or the like. Then, the customer is called so that he can receive the goods which is prepared in the shop.

The design purpose of the conventional mobile ordering is to allow the customer to be served the ordered goods as soon as possible when the customer arrives at the shop, preferably immediately when the customer arrives at the shop. Such a purpose has been successfully achieved by the conventional mobile ordering scheme.

However, the conventional scheme has overlooked the fact that the time interval varies greatly between placement of a mobile order and arrival at the shop. Sometimes, the customer may arrive at the shop 10 to 20 minutes later than his original intention due to his circumstances, such as when the road is blocked, he meets acquaintance on the go, or he cannot find a parking place. This situation is commonly experienced in daily life, which may cause a problem in the conventional scheme.

When a mobile order is passed to a shop, it is assumed as a normal order so that the goods starts to be prepared as ordered. However, when a customer arrives at the shop 10 to 20 minutes later than his intention, the quality of the goods is lowered. For example, coffee becomes cooled or rancid so that its taste and aroma become degraded. Further, food is cooled so that its taste, aroma, and texture of chewing become degraded. In this case, the customer shall be dissatisfied because he has received unsatisfactory service, and the shop shall be worry about the degradation of customer satisfaction. Accordingly, some shops set up a business regulation such that, in the case of mobile order, goods shall be discarded and re-prepared again when a predetermined time elapses after preparing the goods.

However, this problem has been considered as an inevitable cost in order to achieve the basic purpose of mobile ordering, i.e., reducing contact of customers and shop staffs and letting the customer to pick up the ordered goods immediately after arriving at the shop. Since it is impossible for a shop to track the location of a customer in real time, it is not possible to know when he will arrive. Accordingly, in general, goods is prepared in a shop when the mobile order is forwarded. When the customer arrives late, unsatisfactory goods is served or the shop has responded by re-preparing again the goods at the expense of the shop.

This problem has also become an obstacle to the spread of mobile ordering technology. Customers are reluctant to use mobile orders when he cannot assure when he may arrive at the shop. Further, shops are reluctant to adopt mobile ordering scheme when dealing with goods which is sensitive to the time interval from preparation to service. In addition, even in areas where mobile ordering is typically accepted, e.g., coffee, shops which value the quality of service are reluctant to adopt mobile ordering.

In addition, in the mobile ordering, the procedure which the customer must go through on the mobile agent unit (110), i.e., the order sequence, was also inconvenient. Due to the nature of mobile ordering, customers are often separated from the shop, which causes the inconvenience of requesting the customers to manually input much information in the mobile ordering procedure. Changing action sequence (culture) in using a shop itself is an obstacle to spread the mobile ordering. If ordering sequence is also complex, it becomes more difficult to spread the mobile ordering.

Accordingly, there is a need for a technology capable of solving the problems of the conventional mobile ordering, not only by technically guaranteeing good quality without additional efforts or costs even if the time interval fluctuates from mobile ordering to arrival, but also by simplifying the order sequence for removing the inconvenience of mobile ordering users.

### DISCLOSURE OF INVENTION

### Technical Problem

It is an object of the present invention to provide a technology for processing a transaction so that a mobile order (i.e., an order for goods or reservation) which is entered on a customer's smart terminal on the go can be forwarded to the shop so as to be appropriately responded to.

In particular, it is an object of the present invention to provide a QoS-based mobile order processing technology which can improve mobile ordering procedure of customers and guarantee Quality of Service (QoS) above a certain level to customers in processing the mobile order which is entered on a customer's smart terminal on the go, by accurately identifying the event of customer's arrival at the shop so as to supplement the contents of the mobile order and to determine when to forward the mobile order to the shop in response to the customer's arrival.

### Technical Solution

In order to achieve the above object, the present invention provides a technology for processing a customer's mobile order on QoS by cooperative operation of a mobile agent unit (120) installed in a customer's smart terminal (100), an order management server (200) of managing mobile orders, a shop terminal (300) installed in each shop, and a shop identifier (310) for setting an effective coverage of each shop.

The mobile order processing method according to the present invention may comprises: a first step of broadcasting, in the shop identifier (310), a shop identification signal, wherein a shop identification code for the corresponding shop is inserted into the shop identification signal; a second step of generating, in the mobile agent unit (120), a mobile order data, wherein the mobile order data includes ordered-goods information and customer identification information, the ordered-goods information is set according to user operation on mobile ordering menu, the customer identification information is preset in the mobile agent unit; a third step of waiting, in the mobile agent unit (120), for a shop arrival event of the customer with respect to the mobile order data; a fourth step of identifying, in the mobile agent unit (120), the shop arrival event of the customer for a specific shop by recognizing the shop identification signal; a fifth step of obtaining, in the mobile agent unit (120), an arrival-shop identification information based on a shop identification code in the shop identification signal, wherein the arrival-shop identification information corresponds to the specific shop where the customer has arrived; a sixth step of associating, in the mobile agent unit (120), the arrival-shop identification information with the mobile order data; a seventh step of transmitting, in the mobile agent unit (120), the mobile order data to the order management server (200) for letting a mobile order be executed; an eighth step of obtaining, in the order management server (200), the ordered-goods information and the arrival-shop identification information with respect to the mobile order from the mobile order data; a ninth step of forwarding, in the order management server (200), the mobile order data to a shop terminal (300) which corresponds to the arrival-shop identification information; and a tenth step of receiving, in the shop terminal (300), the mobile order data and accepting the mobile order by obtaining the customer identification information and the ordered-goods information therefrom.

In the present invention, the shop identification signal may be configured in combination of inaudible high-frequency sound signal of predetermined signal pattern and Bluetooth signal. In this case, the first step may comprise: a step of outputting, in the shop identifier (310), inaudible high-frequency sound signal to a speaker, wherein the inaudible high-frequency sound signal has a predetermined signal pattern; and a step of wireless broadcasting, in the shop identifier (310), Bluetooth signal which is encoded with a shop identification code for the corresponding shop. Further, the third step may comprise: a step of analyzing, in the mobile agent unit (120), a sound signal which is inputted through a microphone of the smart terminal (100); a step of identifying, in the mobile agent unit (120), a shop arrival event of a customer by detecting the inaudible high-frequency sound signal of the predetermined signal pattern through the sound signal analysis; and a step of obtaining, in the mobile agent unit (120), a shop identification code from the Bluetooth signal, wherein the shop identification code corresponds to a shop where the customer has arrived.

In the present invention, the tenth step may comprise: a step of receiving, in the shop terminal (300), the mobile order data from the order management server (200); a step of identifying, in the shop terminal (300), when the shop terminal (300) receives the mobile order data (hereinafter, "mobile order arrival time"); a step of obtaining, in the shop terminal (300), the customer identification information and the ordered-goods information with respect to the mobile order from the mobile order data; and a step of accepting, in the shop terminal (300), the mobile order by inserting the mobile order into a shop order list based on the mobile order arrival time between a series of offline orders which are accepted at the shop counter.

Further, in the present invention, the tenth step may comprise: a step of receiving, in the shop terminal (300), the mobile order data from the order management server (200); a step of obtaining, in the shop terminal (300), the customer identification information and the ordered-goods information with respect to the mobile order from the mobile order data; and a step of accepting, in the shop terminal (300), the mobile order by placing the mobile order in the front end of a shop order list so that the mobile order has higher priority than a series of offline orders on pending which are accepted at the shop counter.

Further, in the present invention, the mobile agent unit (120) identifies when the mobile agent unit (120) generates the mobile order data (hereinafter, "mobile order generation time") and then inserts the mobile order generation time into the mobile order data in the second step. In this case, the tenth step may comprise: a step of receiving, in the shop terminal (300), the mobile order data from the order management server (200); a step of obtaining, in the shop terminal (300), the customer identification information, the ordered-goods information, and the mobile order generation time with respect to the mobile order from the mobile order data; and a step of accepting, in the shop terminal (300), the mobile order by inserting the mobile order into a shop order list based on the mobile order generation time between a series of offline orders which are accepted at the shop counter.

Meanwhile, the computer program according to the present invention is stored in a medium in order to execute a QoS-based mobile order processing method using shop arrival identification as set forth above in combination with a hardware.

### Advantageous Effects

According to the present invention, there is an advantage in that the quality of service can be guaranteed through technical configuration by transacting a mobile order which is entered on the go by a customer by use of shop arrival identification.

In addition, according to the present invention, there is an advantage in that user convenience can be improved by simplifying the app operations which a customer shall perform on his smart terminal in order to complete a mobile order.

In addition, according to the present invention, there is an advantage in that the application range of mobile ordering technology can be expanded to general restaurants, hospitals, financial institutions, etc. since the quality of service of mobile ordering becomes guaranteed.

### Brief Description of the Drawings

FIG. 1 is a diagram conceptually showing an example of conventional mobile order processing method.
FIG. 2 is a diagram conceptually showing the QoS-based mobile order processing method according to the present invention.
FIG. 3 is a diagram showing an example of app screens which are displayed on customer's smart terminal in a mobile ordering procedure according to the present invention.
FIG. 4 is a flowchart showing the overall process of QoS-based mobile order processing according to the present invention.
FIG. 5 is a flowchart showing a process of executing a mobile order in a smart terminal in the present invention.
FIG. 6 is a flowchart showing a first embodiment of receiving and processing a mobile order in a shop in the present invention.
FIG. 7 is a flowchart showing a second embodiment of receiving and processing a mobile order in a shop in the present invention.
FIG. 8 is a flowchart showing a third embodiment of receiving and processing a mobile order in a shop in the present invention.

### Embodiment for Carrying Out the Invention

Hereinafter, the present invention will be described in detail with reference to the drawings.

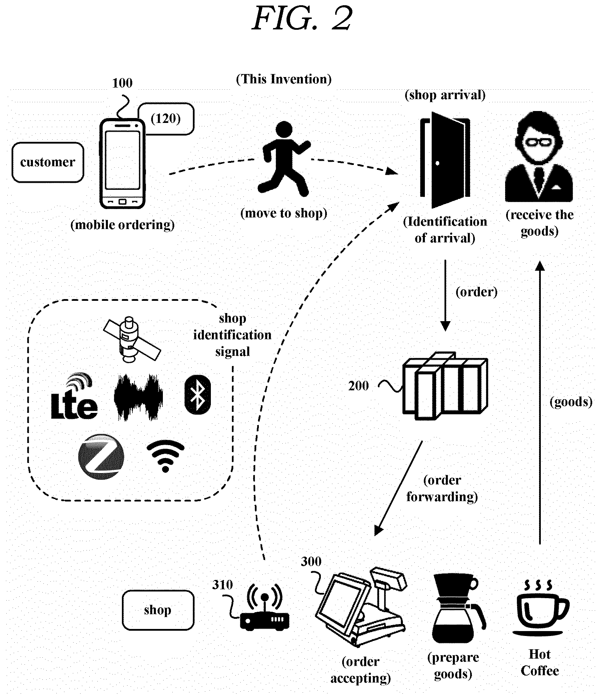

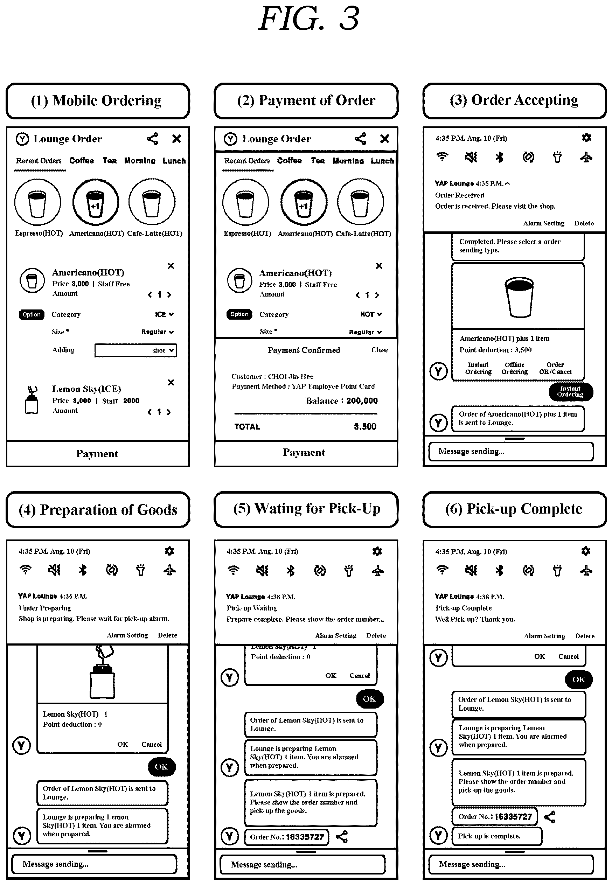

FIG. 2 is a diagram conceptually showing the QoS-based mobile order processing method according to the present invention, and FIG. 3 is a diagram showing an example of app screens which are displayed on customer's smart terminal in a mobile ordering procedure according to the present invention. In the present invention, the mobile ordering may be applied to goods pickup and shop reservation. However, in this specification, for convenience of explanation, it is described based on the case of goods pickup.

As described above with reference to FIG. 1, the conventional mobile ordering system is centered on the on-time service processing. Focusing on fast food, it has been an important interest to provide services to customers as quickly as possible. Being an extension of that, the mobile ordering is configured with the intention of serving goods immediately when customers enter the shop.

On the other hand, the present invention has processing configuration which can always guarantee Quality of Service (QoS) above a certain level to customers, while keeping the advantage of the mobile ordering system that customers can place orders in advance using their smart terminal without having to communicate face-to-face with shop staffs. Accordingly, the mobile ordering can be utilized to some service fields, such as restaurants, hospitals, financial institutions, etc. where the conventional mobile ordering has been difficult to adopt.

The QoS-based mobile order processing method according to the present invention is conceptually described with reference to FIG. 2.

While a customer is moving in a vehicle, for example, he activates a mobile ordering app on his smart terminal (100) on the go and then enters a mobile order for a specific goods, for example, a cup of Americano of a specific coffee brand. The mobile order is processed by a mobile agent unit (120) which is installed in the smart terminal (100). FIG. 3 (1) and (2) show that a customer performs goods selection and payment on an app menu screen which is provided by the mobile agent unit (120). FIG. 3 (3) shows that the mobile order has been normally received.

In the present invention, although the customer inputs mobile order items and completes the payment, the mobile agent unit (120) does not immediately forward the mobile order but temporarily stores the mobile order. In addition, the mobile ordering procedure can be configured by excluding the step of selecting a shop (e.g., Gangnam station branch) where the customer is going to pick up the goods.

When the customer arrives at a shop by a vehicle or on foot, the mobile agent unit (120) identifies the shop arrival event. A shop identifier (310) is installed in each shop. The shop identifier (310) wirelessly transmits a shop identification signal which contains unique information of the shop in which the shop identifier (310) is installed. When the customer enters the specific shop while carrying the smart terminal (100), the mobile agent unit (120) installed in the smart terminal (100) recognizes the shop identification signal. Accordingly, the mobile agent unit (120) recognizes that the customer has arrived at the specific shop.

In the present invention, a shop identifier (310) is provided. The shop identifier (310) cooperates with the mobile agent unit (120) which is installed in the user's smart terminal (100) so as to enable the mobile agent unit (120) to identify that the customer has arrived the specific shop. In addition, through the cooperative operation with the shop identifier (310), the mobile agent unit (120) may identify the shop where the shop has arrived at.

The shop identifier (310) wireless broadcasts a shop identification signal in order to distinguish an effective coverage of each shop and further preferably to identify each of shops. When the mobile agent unit (120) recognizes the shop identification signal, the mobile agent unit (120) identifies that the corresponding customer has arrived at a shop to which the technology of the present invention is applied. The mobile agent unit (120) may be configured to recognize the shop identification signal is valid only when its signal strength is greater than a predetermined threshold.

In the present invention, the shop identification signal may be implemented with any technology as long as the signal is suitable for distinguishing an effective coverage of each shop and for identifying each of shops. For example, the shop identification signal may be implemented with any one or a combination of wireless LAN, GPS, LTE, Bluetooth, Zigbee, and Geo-Fencing, etc.

By the way, among the currently presented technical means, it is preferable that the shop identification signal is configured by utilizing inaudible high-frequency sound signal. When outputting to a speaker the inaudible high-frequency sound in the band of approximately 18 kHz or higher, the shop identification signal can be provided through a microphone of the smart terminal (100) without disturbing people in the shop. The sound signal is also suitable for the purpose of the present invention in that it can accurately distinguish the interior and exterior of the shop. Alternatively, in other embodiment of the present invention, the shop identification signal may be implemented by tuning signal strength of Bluetooth, Zigbee, wireless LAN signal, etc. or may be implemented by precisely matching the boundaries of Geo-Fencing.

Further, the shop identification signal may be configured in combination of a plurality of these signal formats, rather than using only one. For example, a shop identification signal may be configured in combination of the inaudible high-frequency sound signal and Bluetooth signal. The inaudible high-frequency sound signal is utilized in order to identify whether the customer has entered the shop, and the Bluetooth signal is utilized in order to identify where the shop is. Meanwhile, other signal combinations are not excluded.

When the mobile agent unit (120) recognizes the shop arrival event, the mobile agent unit (120) immediately executes the mobile order with respect to the corresponding shop. That is, the mobile agent unit (120) supplements items of the mobile order by designating the shop where the customer has arrived as a pickup shop, and then transmits the mobile order to the order management server (200). The order management server (200) forwards mobile order data to the shop terminal (300) of the corresponding branch of shop. In the shop, the shop terminal (300) receives the mobile order data from the order management server (200), and then accepts the mobile order according to order handling rule of the business regulation. Then, the ordered goods shall be prepared and provided to the customer.

FIG. 3 (4) shows that the mobile order is forwarded to the pickup shop as the customer arrives at the specific shop. FIG. 3 (5) shows a screen in which the shop terminal (300) guides the goods pickup to the mobile agent unit (120) when the goods has been prepared in the shop for the mobile order. FIG. 3 (6) shows that the goods pickup for the mobile order has been completed.

Referring to FIG. 2, no matter how long it takes for the customer to arrive at the shop after entering the mobile order in the smart terminal (100), the time interval from preparation to reception of goods is lower than a predetermined range. Accordingly, the quality of the goods which is provided to the customer can be consistently managed. The management of quality of service does not depend on the ability of the shop manager or the effort of staffs working on the shop. Rather, the management of quality of service can be structurally achieved by the cooperative operation of the mobile agent unit (120), the order management server (200), the shop terminal (300), and the shop identifier (310).

In addition, referring to FIG. 3, the step of selecting a shop to pick up the goods is unnecessary in the mobile ordering procedure. This simplifies the mobile ordering procedure which the customer experiences, thereby helping to spread mobile orders. This simplification of the order procedure is achieved by the cooperative operation of the mobile agent unit (120), the order management server (200), the shop terminal (300), and the shop identifier (310).

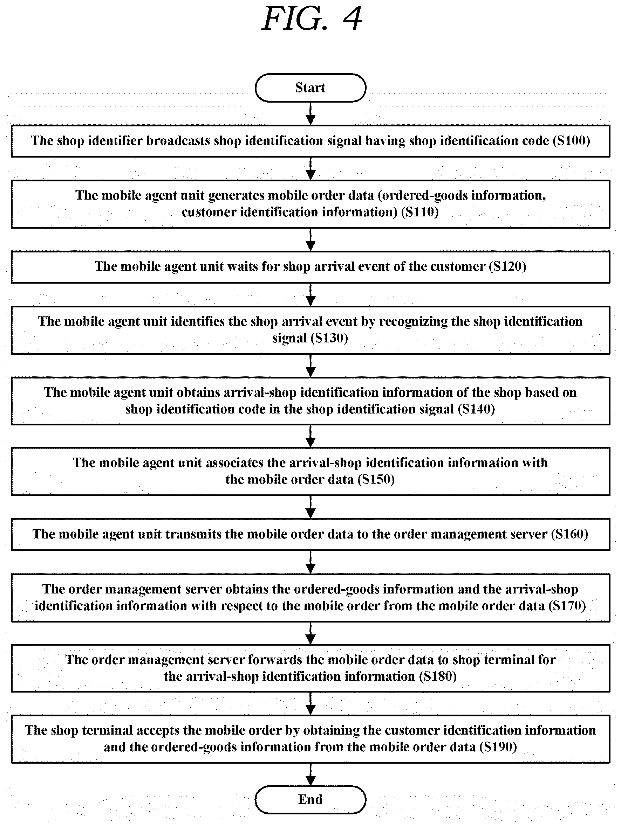

FIG. 4 is a flowchart showing the overall process of QoS-based mobile order processing according to the present invention. The mobile order processing method of FIG. 4 is a technology of processing the customer's mobile order on QoS by cooperative operation of a mobile agent unit (120) installed in a customer's smart terminal (100), an order management server (200) of managing the mobile orders, the shop terminal (300) installed in each shop, and the shop identifier (310).

Step (S100): First, the shop identifier (310) broadcasts a shop identification signal, wherein a shop identification code for the corresponding shop is inserted into the shop identification signal. In the present invention, a shop identifier (310) is installed in each shop. The shop identifier (310) wirelessly transmits a shop identification signal which contains unique information of the shop in which the shop identifier (310) is installed. As described above, the shop identification signal is preferably configured in combination of inaudible high-frequency sound signal and Bluetooth signal.

Step (S110): If a customer activates a mobile ordering app on his smart terminal (100) on the go and then enters a mobile order for a specific goods, the mobile agent unit (120) generates a mobile order data which includes ordered-goods information and customer identification information. The ordered-goods information is set according to user operation on mobile ordering menu, and the customer identification information is preset in the mobile agent unit (120). The ordered-goods information is an item selected by the customer on the mobile ordering menu of the mobile ordering app, for example, a cup of Americano. The customer identification information is for distinguishing who the customer is currently entering a mobile order, and is generally set when a mobile ordering app is installed on the smart terminal (100) and activated.

Step (S120, S130): The mobile agent unit (120) does not immediately forward the generated mobile order data to the order management server (200), but waits until the customer arrives at the shop, that is, until a shop arrival event occurs. When the customer enters the specific shop while carrying the smart terminal (100), the mobile agent unit (120) installed in the smart terminal (100) recognizes the shop identification signal which is wirelessly transmitted by the shop identifier (310) installed in the shop. Accordingly, the mobile agent unit (120) identifies that the customer has arrived at the shop. In this way, the mobile agent unit (120) identifies the shop arrival event of the customer for a specific shop by the shop identification signal.

Steps (S140 - S160): The mobile agent unit (120) obtains an arrival-shop identification information corresponding to the specific shop where the customer has arrived, based on a shop identification code in the shop identification signal. The shop identification code may be used as it is for the arrival-shop identification information. Alternatively, the arrival-shop identification information may be generated by a separate encoding rule.

Then, the mobile agent unit (120) associates the arrival-shop identification information with the mobile order data. As described above, there is no step of selecting a shop to pick up the goods in the mobile ordering procedure of the present invention. Accordingly, the mobile order data which is generated by the mobile agent unit (120) in step (S110) contains the ordered-goods information and the customer identification information with leaving the shop information as unspecified. Therefore, the mobile agent unit (120) associates the arrival-shop identification information with the mobile order data, wherein the arrival-shop identification information is obtained from the shop identification signal.

Then, the mobile agent unit (120) transmits the mobile order data to the order management server (200) for letting a mobile order be executed.

Steps (S170, S180): The order management server (200) receives the mobile order data from the mobile agent unit (120), and then obtains the ordered-goods information and the arrival-shop identification information with respect to the mobile order from the mobile order data. That is, the order management server (200) identifies which shop and which goods are directed by the mobile order. The order management server (200) manages a plurality of shops, and therefore is connected with a plurality of shop terminals. Among the plurality of shop terminals, the order management server (200) forwards the mobile order data to a shop terminal (300) corresponding to the arrival-shop identification information.

Step (S190): The shop terminal (300), which is installed in the shop where the customer arrived in step (S130), receives the mobile order data, which was entered by the customer in step (S 110), from the order management server (200), and then accepts the mobile order by obtaining the customer identification information and the ordered-goods information from the mobile order data.

In the above process, steps (S130) to (S190) can be quickly performed through computer processing and network transmission. Therefore, the mobile order can be automatically forwarded from the mobile agent unit (120) to the shop terminal (300) immediately when the customer arrives at the shop.

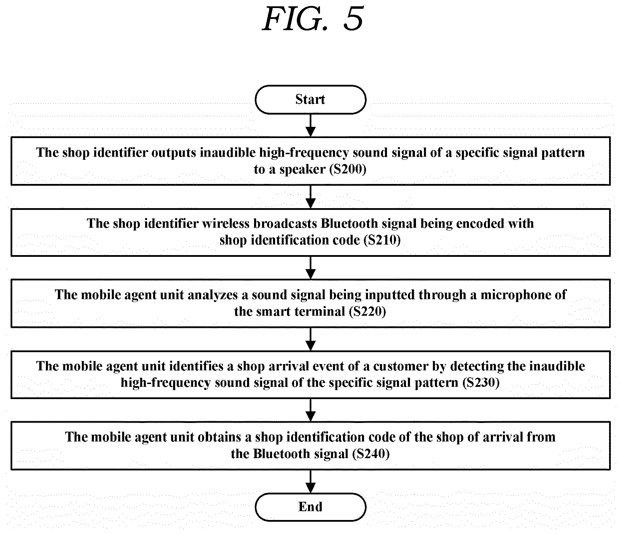

FIG. 5 is a flowchart showing a process of executing a mobile order in a smart terminal (100) immediately after a customer arrives at a shop in the present invention. In FIG. 5, the present invention is described with reference to an example in which a shop identification signal is configured in combination of inaudible high-frequency sound signal and Bluetooth signal.

Steps (S200, S210): First, the shop identifier (310), which is installed in each shop, outputs to a speaker inaudible high-frequency sound signal having predetermined signal pattern and wireless broadcasts Bluetooth signal which is encoded with a shop identification code for the corresponding shop.

It is preferable that the shop identification signal has a predetermined signal pattern so that shop identification signal can be distinguished as the inaudible high-frequency sound signal which is outputted by the shop identifier (310) for the present invention. Even in the absence of the shop identifier (310), there exists some level of inaudible high-frequency sounds in the band of approximately 18 kHz or higher. Therefore, the predetermined signal pattern is required as a kind of identification code or a preamble signal for distinguishing the shop identification signal which is outputted by a shop identifier (310).

Further, it is preferable that the shop identifier (310) makes the shop identification signal so as to include a shop identification code, i.e., an unique information for distinguishing the shop in which the shop identifier (310) is installed. It is possible to transmit the shop identification code through inaudible high-frequency sound signal using an encoding technology such as Frequency-Shift-Keying (FSK). However, the amount of information in this manner is limited. Therefore, it is preferable to use a combination of digital wireless communication signals.

Steps (S220 - S240): The mobile agent unit (120) analyzes a sound signal which is inputted through a microphone of the smart terminal (100) in real time. When the mobile agent unit (120) detects the inaudible high-frequency sound signal of the predetermined signal pattern through the sound signal analysis, the mobile agent unit (120) identifies a shop arrival event of a customer. If the inaudible high-frequency sound signal which is outputted by the shop identifier (310) is received in an effective strength by the microphone of the smart terminal (100), this means that the customer who is carrying the smart terminal (100) enters the shop or arrives at just before the door which is open.

Because it is confirmed that the customer arrives at the shop, it is necessary to identify where the arrival shop is. The mobile agent unit (120) obtains from the Bluetooth signal a shop identification code which corresponds to the shop where the customer has arrived.

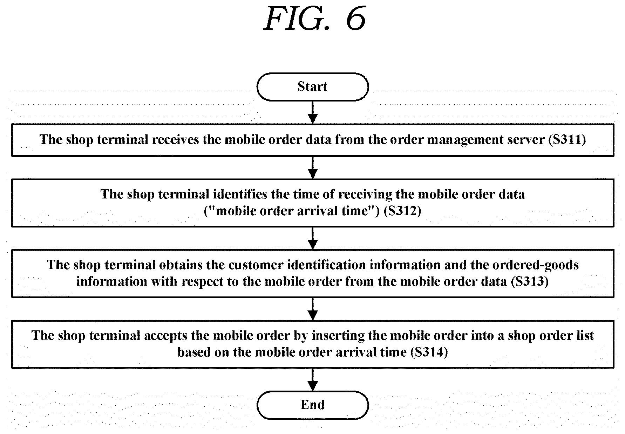

FIGs. 6 to 8 show three embodiments of receiving and processing a mobile order in a shop in the present invention.

In general, not only mobile orders come into the shop, but offline orders are also constantly placed at the shop counter. Therefore, the shop needs to effectively merge the mobile and offline orders. In particular, in the present invention, the customer of mobile order thinks that he placed the order long before he arrives at the shop, which is differ from the time when the shop receives the mobile order data.

In view of this point, three embodiments of receiving and processing a mobile order in a shop are provided in the present invention.

FIG. 6 is a flowchart showing a first embodiment of receiving and processing a mobile order in a shop in the present invention.

Steps (S311, S312): As the order management server (200) forwards the mobile order data in step (S180), the shop terminal (300) installed in the shop where the customer arrives receives the mobile order data in step (S311). Accordingly, the shop terminal (300) identifies the time when the shop terminal (300) receives the mobile order data (hereinafter, "mobile order arrival time").

Steps (S313, S314): The shop terminal (300) obtains the customer identification information and the ordered-goods information with respect to the mobile order from the mobile order data. That is, the shop terminal (300) identifies who has ordered which goods.

Then, the shop terminal (300) accepts the mobile order by inserting the mobile order into a shop order list based on the mobile order arrival time between a series of offline orders which are accepted at the shop counter. That is, the shop terminal (300) sets the serving order of the mobile order as if the mobile order is placed as an offline order at the shop counter at the time when the mobile order data is received from the order management server (200). This is advantageous in that the customer of the mobile order can feel that he is relatively quickly serviced when a waiting line is long at the shop counter.

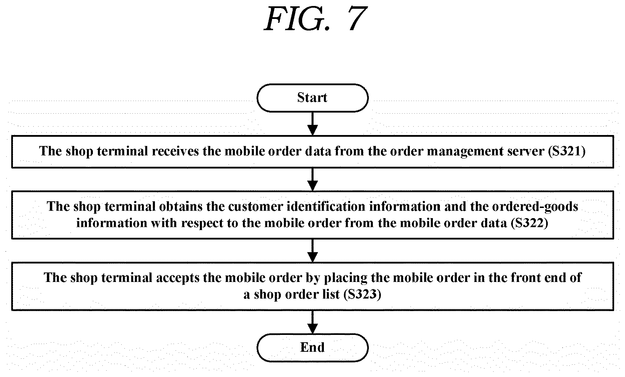

FIG. 7 is a flowchart showing a second embodiment of receiving and processing a mobile order in a shop in the present invention.

Step (S321): As the order management server (200) forwards the mobile order data in step (SI80), the shop terminal (300) installed in the shop where the customer arrives receives the mobile order data in step (S321).

Step (S322): The shop terminal (300) obtains the customer identification information and the ordered-goods information with respect to the mobile order from the mobile order data. That is, the shop terminal (300) identifies who has ordered which goods.

Step (S323): The shop terminal (300) accepts the mobile order by placing the mobile order in the front end of a shop order list so that the mobile order has higher priority than a series of offline orders on pending which are accepted at the shop counter. The shop terminal (300) allows the mobile order to be serviced with the highest priority by arranging the mobile order in the front end of a shop order list, even if there exist offline orders which are still pending when receiving the mobile order data. The customer of mobile order placed the order much before he arrives at the shop, which is reflected in the order processing.

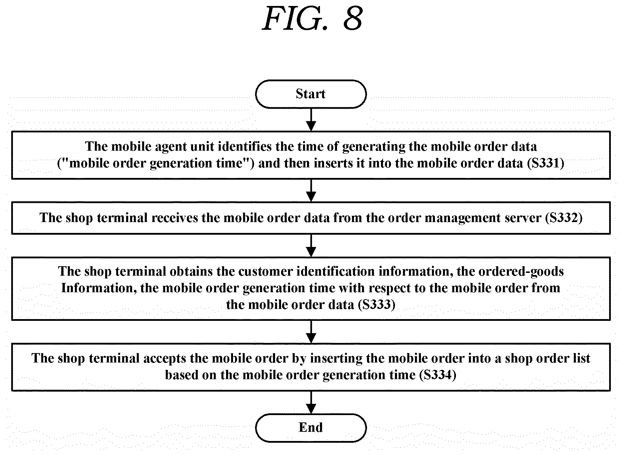

FIG. 8 is a flowchart showing a third embodiment of receiving and processing a mobile order in a shop in the present invention.

Step (S331): The mobile agent unit (120) receives a mobile order from a customer and then generates the mobile order data in step (S110), at which the mobile agent unit (120) identifies the time when the mobile agent unit (120) generates the mobile order data (hereinafter, "mobile order generation time"). Then, the mobile agent unit (120) inserts the mobile order generation time into the mobile order data. The mobile order generation time corresponds to a time point when the customer performs the mobile order operation on his smart terminal (100).

Step (S332): As the order management server (200) forwards the mobile order data in step (SI80), the shop terminal (300) installed in the shop where the customer arrives receives the mobile order data in step (S332).

Step (S333): The shop terminal (300) obtains the customer identification information, the ordered-goods information, and the mobile order generation time with respect to the mobile order from the mobile order data. That is, the shop terminal (300) identifies who has ordered which goods, and further identifies when the mobile order was entered.

Step (S334): The shop terminal (300) accepts the mobile order by inserting the mobile order into a shop order list based on the mobile order generation time between a series of offline orders which are accepted at the shop counter.

That is, the shop terminal (300) sets the serving order of the mobile order as if the mobile order is placed as an offline order at the shop counter at the time when the mobile order data is entered on customer's smart terminal (100). The customer of mobile order has placed the order much before he arrives at the shop, which is reflected in the order processing. This is advantageous in that the order data which are generated from the mobile order customers as well as from the offline order customers can be handled in a balanced way, thereby making it appropriate the response time which are treated in computer software engineering.

Meanwhile, the present invention can also be embodied as computer readable codes on a computer readable non-volatile recording medium. This non-volatile recording medium includes various types of storage device, e.g., hard disks, SSD, CD-ROM, NAS, magnetic tapes, web disks, and cloud disks. Further, the non-volatile recording medium can also be implemented such that the codes are distributed, stored, and executed in a plurality of storage devices connected each other via network. In addition, the present invention may be implemented in the form of a computer program stored in a medium in order to execute a specific procedure by being combined with hardware.

## Claims

1. A QoS-based mobile order processing method using shop arrival identification for processing a customer's mobile order on QoS by cooperative operation of a mobile agent unit (120) installed in a customer's smart terminal (100), an order management server (200) of managing mobile orders, a shop terminal (300) installed in each shop, and a shop identifier (310) for setting an effective coverage of each shop, comprising:
a first step of broadcasting, in the shop identifier (310), a shop identification signal, wherein a shop identification code for the corresponding shop is inserted into the shop identification signal;
a second step of generating, in the mobile agent unit (120), a mobile order data, wherein the mobile order data includes ordered-goods information and customer identification information, the ordered-goods information is set according to user operation on mobile ordering menu, the customer identification information is preset in the mobile agent unit;
a third step of waiting, in the mobile agent unit (120), for a shop arrival event of the customer with respect to the mobile order data;
a fourth step of identifying, in the mobile agent unit (120), the shop arrival event of the customer for a specific shop by recognizing the shop identification signal;
a fifth step of obtaining, in the mobile agent unit (120), an arrival-shop identification information based on a shop identification code in the shop identification signal, wherein the arrival-shop identification information corresponds to the specific shop where the customer has arrived;
a sixth step of associating, in the mobile agent unit (120), the arrival-shop identification information with the mobile order data;
a seventh step of transmitting, in the mobile agent unit (120), the mobile order data to the order management server (200) for letting a mobile order be executed;
an eighth step of obtaining, in the order management server (200), the ordered-goods information and the arrival-shop identification information with respect to the mobile order from the mobile order data;
a ninth step of forwarding, in the order management server (200), the mobile order data to a shop terminal (300) which corresponds to the arrival-shop identification information; and
a tenth step of receiving, in the shop terminal (300), the mobile order data and accepting the mobile order by obtaining the customer identification information and the ordered-goods information therefrom.

2. The QoS-based mobile order processing method using shop arrival identification of claim 1,
wherein the shop identification signal is configured in combination of inaudible high-frequency sound signal of predetermined signal pattern and Bluetooth signal, and
wherein the first step comprises:
a step of outputting, in the shop identifier (310), inaudible high-frequency sound signal to a speaker, wherein the inaudible high-frequency sound signal has a predetermined signal pattern; and
a step of wireless broadcasting, in the shop identifier (310), Bluetooth signal which is encoded with a shop identification code for the corresponding shop, and
wherein the third step comprises:
a step of analyzing, in the mobile agent unit (120), a sound signal which is inputted through a microphone of the smart terminal (100);
a step of identifying, in the mobile agent unit (120), a shop arrival event of a customer by detecting the inaudible high-frequency sound signal of the predetermined signal pattern through the sound signal analysis; and
a step of obtaining, in the mobile agent unit (120), a shop identification code from the Bluetooth signal, wherein the shop identification code corresponds to a shop where the customer has arrived.

3. The QoS-based mobile order processing method using shop arrival identification of claim 1,
wherein the tenth step comprises:
a step of receiving, in the shop terminal (300), the mobile order data from the order management server (200);
a step of identifying, in the shop terminal (300), when the shop terminal (300) receives the mobile order data (hereinafter, "mobile order arrival time");
a step of obtaining, in the shop terminal (300), the customer identification information and the ordered-goods information with respect to the mobile order from the mobile order data; and
a step of accepting, in the shop terminal (300), the mobile order by inserting the mobile order into a shop order list based on the mobile order arrival time between a series of offline orders which are accepted at the shop counter.

4. The QoS-based mobile order processing method using shop arrival identification of claim 1,
wherein the tenth step comprises:
a step of receiving, in the shop terminal (300), the mobile order data from the order management server (200);
a step of obtaining, in the shop terminal (300), the customer identification information and the ordered-goods information with respect to the mobile order from the mobile order data; and
a step of accepting, in the shop terminal (300), the mobile order by placing the mobile order in the front end of a shop order list so that the mobile order has higher priority than a series of offline orders on pending which are accepted at the shop counter.

5. The QoS-based mobile order processing method using shop arrival identification of claim 1,
wherein the mobile agent unit (120) identifies when the mobile agent unit (120) generates the mobile order data (hereinafter, "mobile order generation time") and then inserts the mobile order generation time into the mobile order data in the second step, and
wherein the tenth step comprises:
a step of receiving, in the shop terminal (300), the mobile order data from the order management server (200);
a step of obtaining, in the shop terminal (300), the customer identification information, the ordered-goods information, and the mobile order generation time with respect to the mobile order from the mobile order data; and
a step of accepting, in the shop terminal (300), the mobile order by inserting the mobile order into a shop order list based on the mobile order generation time between a series of offline orders which are accepted at the shop counter.

6. A computer program stored in a medium in order to execute a QoS-based mobile order processing method using shop arrival identification according to any one of claims 1 to 5 in combination with hardware.
